# EUROPÄISCHE PATENTSCHRIFT

(11) **EP 3 620 287 B1**
(45) Veröffentlichungstag und Bekanntmachung des Hinweises auf die Patenterteilung: **07.04.2021**
(21) Anmeldenummer: 19195175.5
(22) Anmeldetag: 03.09.2019
(51) Int. Cl.: B29C 45/42, B29C 45/72, B29C 49/64, B29K 105/00

(54) **ENTNAHMEELEMENT**
REMOVAL ELEMENT
ÉLÉMENT DE RÉCEPTION

(30) Priorität: 07.09.2018 DE 102018121878
(43) Veröffentlichungstag der Anmeldung: 11.03.2020
(73) Patentinhaber: MHT Mold & Hotrunner Technology AG, 65239 Hochheim (DE)
(72) Erfinder: Tilsner, Christian, 64331 Weiterstadt (DE); Süß, Peter, 64409 Messel (DE)
(74) Vertreter: WSL Patentanwälte Partnerschaft mbB

(56) Entgegenhaltungen:
- WO-A1-2008/083460
- WO-A1-2012/003583
- DE-T5-112015 004 773
- DE-U1- 29 716 911

## Beschreibung

Die vorliegende Erfindung betrifft ein Entnahmeelement für die Entnahme eines Hohlkörperformteils aus einem Spritzgießwerkzeug. Das Hohlkörperformteil weist einen Formteilinnenraum und eine Formteilöffnung auf, welche von einem Formteilrand begrenzt wird. Des Weiteren betrifft die vorliegende Erfindung eine Nachbehandlungsplatte sowie ein Nachbehandlungssystem mit einem solchen Entnahmeelement.

Das Spritzgießen ist eines der wichtigsten Verfahren zur Herstellung von Formlingen bzw. Formteilen. Hierbei wird die im Allgemeinen ursprünglich als Pulver oder Granulat vorliegende Formmasse erhitzt, plastifiziert und unter hohem Druck in ein entsprechendes Formwerkzeug gedrückt. Die Formmasse erstarrt in dem Formwerkzeug und wird anschließend als Formteil dem geöffneten Werkzeug entnommen.

Ein Beispiel eines Formlings ist ein Hohlkörpervorformling zur Herstellung von PET-Flaschen. Die vorliegende Erfindung wird am Beispiel eines solchen Hohlkörpervorformlings erläutert. Sie kann aber prinzipiell auch mit anderen Formteilen verwendet werden.

Handelsübliche PET-Flaschen werden im Allgemeinen durch Streckblasformen eines Hohlkörpervorformlings hergestellt. Dabei wird der Hohlkörpervorformling in einem ersten Schritt mittels Spritzgießen erstellt. Das sich an den Spritzgießvorgang anschließende Streckblasformen kann entweder unmittelbar nach Herstellung des Hohlkörpervorformlings oder zu einem späteren Zeitpunkt erfolgen.

Bei der Herstellung der entsprechenden Spritzgießformen ist ein hoher Aufwand vonnöten, da die Spritzgießform einerseits für sehr hohe Drücke ausgelegt sein muss und andererseits auch entsprechend beheizte und/oder gekühlte Kanäle aufweisen muss.

Üblicherweise besteht ein Spritzgießwerkzeug zur Herstellung von PET-Vorformlingen aus einer Vielzahl, z.B. 96, Kavitäten, in die entsprechend ausgebildete Werkzeugkerne eingeführt werden. Bei geschlossenem Werkzeug, d.h., wenn der Kern in die entsprechende Kavität eingesetzt ist, wird zwischen dem Kern einerseits und der Kavität andererseits ein Raum, der sogenannte Formraum, gebildet. In diesem Raum wird dann der plastifizierte Kunststoff, z.B. PET, unter hohem Druck eingespritzt. Sobald der PET-Vorformling genügend abgekühlt ist, kann die Form geöffnet und der Vorformling entnommen werden.

Um die Zykluszeiten, d.h. die Zeit von einem Spritzgießvorgang bis zu dem nächsten Spritzgießvorgang, zu reduzieren, ist es bereits üblich, den Vorformling zu einem sehr frühen Zeitpunkt aus der Form zu entnehmen, zu dem der Vorformling an seinen Außenflächen bereits fest ist, dessen innerer Bereich jedoch noch flüssig ist. In diesem Zustand wird der Vorformling im Allgemeinen einer sogenannten Aufnahmeplatte übergeben, die aus einer Gruppe von Aufnahmekavitäten besteht. So ist es beispielsweise bei den sogenannten Vertikalwerkzeugen, d.h. denjenigen Spritzgießwerkzeugen, die sich durch eine vertikale Bewegung des einen Werkzeugteils gegenüber dem anderen öffnen, üblich, die Werkzeugform bereits nach z.B. zehn Sekunden zu öffnen, eine Aufnahmeplatte mit entsprechenden Aufnahmekavitäten in die Form einzufahren, die einzelnen Preforms in die Aufnahmekavitäten mittels Schwerkraft hineinfallen zu lassen, die Aufnahmeplatte mit den Vorformlingen aus dem Werkzeug herauszufahren, die Form wieder zu schließen und den nächsten Spritzgießvorgang zu beginnen. Während des nächsten Spritzgießvorgangs verbleiben die vorherigen Preforms in der Aufnahmekavität, die üblicherweise gekühlt wird. Es sind auch Ausführungsformen bekannt, bei denen die einzelnen Vorformlinge mittels einer Greifereinheit aus der Form entnommen und in die außerhalb der Werkzeugform angeordnete Aufnahmeplatte übergeben werden.

Da der Vorformling zur Abkühlung in der Aufnahmekavität des Standes der Technik eine verhältnismäßig lange Zeit verweilen muss, sodass in der Regel bereits der nächste Vorformling aus dem Spritzgießwerkzeug entnommen werden kann, bevor der Vorformling in der Aufnahmekavität so weit abgekühlt ist, dass er ohne die Gefahr einer Beschädigung entnommen werden kann, ist es bereits üblich, Aufnahmeplatten zu verwenden, die mehrere Gruppen von Aufnahmekavitäten besitzen, wobei jede Gruppe so viele Aufnahmekavitäten aufweist, wie das Spritzgießwerkzeug Vorformlinge pro Spritzzyklus bereitstellt. Die einzelnen Aufnahmekavitätengruppen werden dann nacheinander mit Vorformlingen bestückt, sodass der einzelne Vorformling länger als einen Spritzgießzyklus in der Aufnahmekavität verbleiben kann.

Um die Zykluszeit weiter zu verkürzen, wurden in den letzten Jahren etliche Anstrengungen unternommen, den Preform bereits zu einem sehr frühen Zeitpunkt aus der Spritzgießform zu entnehmen. Da der Preform zu solch einem frühen Zeitpunkt noch relativ weich ist, werden höhere Anforderungen an die Nachbehandlung gestellt. So ist bereits vorgeschlagen worden, den in der Aufnahmekavität gehaltenen Vorformling zusätzlich mit einem Nachbehandlungsstift, der in den Vorformling eingebracht wird, zu kühlen bzw. nachzubehandeln. Der Vorformling wird somit nicht nur von außen über die gekühlte Aufnahmekavität, sondern auch von innen über die Nachbehandlungsstifte gekühlt. In der Regel sind die Nachbehandlungsstifte auf einer Nachbehandlungsplatte angeordnet, die relativ zu der Aufnahmeplatte mit den Aufnahmekavitäten verschoben werden kann, wobei in einer Position die Nachbehandlungsstifte innerhalb der Vorformlinge angeordnet sind, während dies in der anderen Position nicht der Fall ist.

Da sich in der Aufnahmeplatte mehrere Gruppen von Aufnahmekavitäten befinden, weist die Nachbehandlungsplatte in der Regel auch die eingangs genannten Entnahmeelemente auf, wobei mit Hilfe der Entnahmeelemente die Formteile aus einer Gruppe von Aufnahmekavitäten entnommen werden, während die Nachbehandlungsstifte die Vorformling in den anderen Gruppen von Aufnahmekavitäten nachbehandeln. Mit den Entnahmeelementen werden somit immer die Formteile aus der Gruppe von Aufnahmekavitäten entnommen, die am längsten in den Aufnahmekavitäten gehalten wurden. Eine Kühlung von innen erfolgt dabei ausschließlich über die Nachbehandlungsstifte, d.h. während des Entnahmevorgangs kommt es zu keiner Nachbehandlung von innen. Dabei kann entweder Fluid, z.B. kühle Luft, über die Entnahmestifte zugeführt werden, so dass dadurch warme Luft aus dem Hohlkörperformling verdrängt und durch die kühlere ersetzt wird, oder Fluid, z.B. warme Luft, aus dem Hohlkörperformling durch die Entnahmestifte abgesaugt wird, so dass kühlerer Luft aus der Umgebung nachströmt. In beiden Fällen erfolgt eine effektivere Abkühlung des Hohlkörperformlings von innen.

Häufig erfolgt die Entnahme mittels Vakuumunterstützung. Dies bedeutet, dass das Entnahmeelement ein Basisteil und einen Teller, der zwischen einer vorgerückten Position und einer zurückgezogenen Position relativ zum Basisteil bewegbar ist, aufweist. Dabei ist ein Federelement vorgesehen, mit welchem der Teller in seine vorgerückte Position gedrückt wird, wobei der Teller dafür vorgesehen ist, mit dem Formteilrand derart in Kontakt zu treten, dass er die Formteilöffnung verschließt und durch den Kontakt mit der Formteilöffnung von der vorgerückten Position in die zurückgezogene Position bewegt wird. Das Entnahmeelement weist darüber hinaus einen Fluidkanal mit einem Kanaleingang und einem Kanalausgang auf, die derart angeordnet sind, dass, wenn der Teller in der zurückgezogenen Position ist, sich der Kanalausgang zu dem Formteilinnenraum öffnet, sodass, wenn der Kanaleingang mit einer Vakuumquelle verbunden wird, Fluid aus dem Formteilinnenraum über den Fluidkanal abgesaugt werden kann. Da der Teller das Hohlkörperformteil verschließt, bildet sich somit innerhalb des Hohlkörpers ein Vakuum aus und der Hohlkörperformteil wird an den Teller gezogen und kann mit diesem zusammen von der Aufnahmekavität wegbewegt werden, um das Hohlkörperformteil aus dem Spritzgießwerkzeug zu entnehmen.

Unter einem Spritzgießwerkzeug werden alle Teile des Spritzgießwerkzeuges verstanden, d.h. nicht nur die den Formraum bildende Kavität, sondern auch die nachgelagerte Aufnahmekavität, in welcher die Nachbehandlung des Hohlkörperformteils stattfindet.

Es kann nun jedoch vorkommen, dass in der Aufnahmekavität gar kein Formteil enthalten ist, weil beispielsweise die zugehörige den Formraum bildende Kavität beschädigt ist. Dies hat jedoch zur Folge, dass dann, wenn der Kanaleingang mit einem Vakuum verbunden wird, sich kein Unterdruck in einem Formteil ausbildet und stattdessen ungehindert Umgebungsluft in den Kanalausgang gesaugt wird. Da in der Regel eine Vielzahl von Aufnahmekavitäten nebeneinander angeordnet sind und daher auch eine Vielzahl von Entnahmeelementen mit einem gemeinsamen Vakuumanschluss verbunden sind, bedeutet dies wiederum, dass der Unterdruck bei den Entnahmeelementen, die neben dem Entnahmeelement, welches nicht von einem Hohlkörperformteil verschlossen wird, angeordnet sind, nicht ausreicht, um das Formteil aus der Aufnahmekavität zu entnehmen.

Daher ist in der DE 11 2015 004773 T5 bereits vorgeschlagen worden, ein Ventilelement mit einem Ventildurchgang zwischen Kanaleingang und Kanalausgang anzuordnen, welches normalerweise geschlossen ist und nur dann, wenn ein Formteil durch eine Bewegung des Tellers detektiert wird, geöffnet wird.

Die Veröffentlichungen WO 2008/083460 A1, WO 2012/003583 A1 und DE 297 16 911 U1 zeigen ebenfalls Entnahmeelemente.

Zur weiteren Reduzierung der Zykluszeit wäre es wünschenswert, wenn eine effektivere Nachbehandlung erfolgen würde.

Ausgehend von dem beschriebenen Stand der Technik ist es daher Aufgabe der vorliegenden Erfindung, ein Entnahmeelement zur Verfügung zu stellen, welches eine effizientere Nachbehandlung von Formteilen erlaubt und zugleich sicherstellt, dass der Fluidstrom durch den Fluidkanal begrenzt ist, wenn kein Hohlkörperformteil zur Entnahme bereit steht.

Erfindungsgemäß wird diese Aufgabe durch ein Entnahmeelement mit den Merkmalen der unabhängigen Patentansprüche gelöst.

Im einfachsten Fall ist in der zweiten Ventilposition der Ventildurchgang geschlossen. Daher wird in der folgenden Beschreibung davon ausgegangen, dass in der zweiten Ventilposition der Ventildurchgang geschlossen ist. Prinzipiell wäre es jedoch auch möglich, in der zweiten Ventilposition den Ventildurchgang lediglich deutlich zu drosseln, das selbst dann die negativen Auswirkungen auf benachbarte Entnahmeelemente für den Fall, dass kein Hohlkörperformteil vorhanden ist, verringert sind.

Die Öffnung des Ventildurchgangs in der zurückgezogenen Position des Tellers ist notwendig, um über den Fluidkanal ein Vakuum anzulegen, um das Formteil entnehmen zu können. Dadurch, dass erfindungsgemäß vorgesehen ist, dass auch in der vorgerückten Position der Ventildurchgang geöffnet ist, sodass über den Fluidkanal Fluid zu- oder abgeführt werden kann, kann eine Nachbehandlung auch über das Entnahmeelement von innen erfolgen. Bei einer dreistufigen Entnahmeplatte, d. h. einer Platte, die dreimal so viele Aufnahmekavitäten wie formteilbildende Kavitäten hat, wird dadurch die Nachbehandlungszeit für die Nachbehandlung des Innenraums des Hohlkörperformlings um fast 50% vergrößert.

In einer besonders bevorzugten Ausführungsform ist vorgesehen, dass der Teller zwischen der vorgerückten Position, der zurückgezogenen Position und einer Verschließposition hin und her bewegbar ist, wobei in der Verschließposition des Tellers das Ventilelement in der zweiten Ventilposition ist. In dieser Ausführungsform hat der Teller insgesamt drei Positionen, nämlich die vorgerückte Position, die zurückgezogene Position und eine Verschließposition. Lediglich in der Verschließposition ist das Ventilelement geschlossen bzw. der Ventildurchgang stark gedrosselt. Sowohl in der vorgerückten Position als auch in der zurückgezogenen Position ist hingegen der Ventildurchgang geöffnet.

Beispielsweise kann die Verschließposition zwischen der vorgerückten Position und der zurückgezogenen Position angeordnet sein. Dies bedeutet, dass dann, wenn ein Vakuum am Kanaleingang anliegt, der Teller sich von der vorgerückten Position in Richtung der zurückgezogenen Position in die Verschließposition bewegt. Dies kann beispielsweise durch entsprechende Steuerflächen, die mit Druck beaufschlagt werden, verwirklicht werden. Es ist allerdings nicht notwendig, dass die Verschließposition zwischen der vorgerückten Position und der zurückgezogenen Position angeordnet ist. So kann die Verschließposition auch weiter von der zurückgezogenen Position entfernt angeordnet sein als die vorgerückte Position.

In einer weiteren bevorzugten Ausführungsform ist in einer dritten Ventilposition der Querschnitt des Ventildurchgangs kleiner als in der ersten Ventilposition und größer als in der zweiten Ventilposition, wobei in der vorgerückten Position des Tellers das Ventilelement in der dritten Ventilposition ist, wenn der Fluiddruck am Kanaleingang größer oder gleich dem Fluiddruck am Kanalausgang ist. In der Regel ist für die Zuführung eines Kühlfluids ein geringerer Querschnitt des Ventildurchgangs notwendig als dies bei einer schnellen Evakuierung des Hohlkörperformlings notwendig ist. Daher ist der Querschnitt des Ventildurchgangs in dieser Ausführungsform in der dritten Ventilposition kleiner als in der ersten Ventilposition.

In einer weiteren bevorzugten Ausführungsform ist vorgesehen, dass das Ventilelement ein Rückschlagventil und ein Sperrventil aufweist, wobei das Rückschlagventil und das Sperrventil parallel zueinander angeordnet sind, sodass in der zurückgezogenen Position des Tellers das Sperrventil geöffnet und in der vorgerückten Position des Tellers das Sperrventil geschlossen ist. Dabei kann das Rückschlagventil derart angeordnet sein, dass es sich schließt, wenn der Fluiddruck am Kanaleingang kleiner als am Kanalausgang ist.

Über das Rückschlagventil kann somit Kühlfluid in den Hohlkörperformling zugeführt werden. Wird der Kanaleingang mit einem Vakuum verbunden, so schließt sich das Rückschlagventil. Nur wenn das Sperrventil dann geöffnet ist, d.h. der Teller in seiner zurückgezogenen Position ist, kann über das Sperrventil der Hohlkörperformling evakuiert werden. Sowohl die Zuführung von Kühlfluid als auch die Evakuierung erfolgt bei dieser Ausführungsform über denselben Fluidkanal.

Des Weiteren betrifft die vorliegende Erfindung eine Nachbehandlungsplatte mit mindestens einem Entnahmeelement wie oben beschrieben, wobei das Basisteil des Entnahmeelementes mit der Nachbehandlungsplatte derart verbunden ist, dass über die Nachbehandlungsplatte Fluid über den Kanaleingang in den Fluidkanal zugeführt oder aus diesem abgesaugt werden kann.

Des Weiteren betrifft die vorliegende Erfindung ein System zur Weiterbehandlung von mittels Spritzgießen hergestellter Hohlkörperformlinge mit
i.) einer Aufnahmeplatte, welche zumindest eine Aufnahmekavität zur Aufnahme eines Formlings aufweist,
ii.) einem Nachbehandlungssystem mit einer Nachbehandlungsplatte wie beschrieben,
iii.) einer Bewegungsvorrichtung, mit der die Aufnahmeplatte relativ zur Nachbehandlungsplatte zwischen einer hinteren Position und einer vorderen Position hin und her bewegt werden kann, wobei der Abstand zwischen der Aufnahmeplatte und der Nachbehandlungsplatte in der vorderen Position kleiner als in der hinteren Position ist.

Zur Nachbehandlung bzw. Entnahme der Hohlkörperformlinge wird somit mit Hilfe der Bewegungsvorrichtung die Aufnahmeplatte in die vordere Position gebracht. In dieser Position steht das Entnahmeelement mit dem Hohlkörperformteil in Kontakt, sodass der Teller in die zurückgezogene Position bewegt wird und über das Entnahmeelement der Hohlkörperformling evakuiert werden kann.

Danach kann die Aufnahmeplatte in die hintere Position gebracht werden, sodass der Hohlkörperformling aus der Aufnahmekavität entnommen wird. Es ist sowohl möglich, die Nachbehandlungsplatte relativ zu einer stehenden Aufnahmeplatte zu bewegen, als auch möglich, die Aufnahmeplatte relativ zu einer stehenden Nachbehandlungsplatte zu bewegen.

Die Nachbehandlungsplatte kann in einer bevorzugten Ausführungsform zumindest einen Nachbehandlungsstift mit einem Fluidkanal aufweisen, durch welchen Fluid in das Innere eines in der Aufnahmekavität aufgenommenen Formlings eingebracht oder daraus abgesaugt werden kann, wobei in der vorderen Position der Nachbehandlungsstift innerhalb der Aufnahmekavität positioniert ist und in der hinteren Position der Nachbehandlungsstift nicht innerhalb der Aufnahmekavität positioniert ist. Im Grunde genommen können Nachbehandlungsstift und Entnahmeelement ähnlich aufgebaut sein, mit dem Unterschied, dass der Nachbehandlungsstift kein Ventilelement und keinen beweglichen Teller aufweist.

In einer weiteren bevorzugten Ausführungsform ist vorgesehen, dass in der vorderen Position der Teller entweder an einem in der Aufnahmekavität aufgenommenen Hohlkörperformteil anliegt und das Ventil in der ersten Ventilposition ist, oder, falls kein Hohlkörperformteil in der Aufnahmekavität positioniert ist, an der Aufnahmekavität anliegt und das Ventil in der zweiten Ventilposition ist.

Weitere Vorteile, Merkmale und Anwendungsmöglichkeiten werden deutlich anhand der folgenden Beschreibung bevorzugter Ausführungsformen und der zugehörigen Figuren. Es zeigen:
Figur 1 eine Schnittansicht und eine Seitenansicht auf eine erste Ausführungsform eines erfindungsgemäßen Entnahmeelementes,
Figur 2 eine Seitenansicht und eine Schnittansicht einer zweiten Ausführungsform eines erfindungsgemäßen Entnahmeelementes und
Figur 3 eine Schnittansicht einer dritten Ausführungsform eines erfindungsgemäßen Entnahmeelementes.

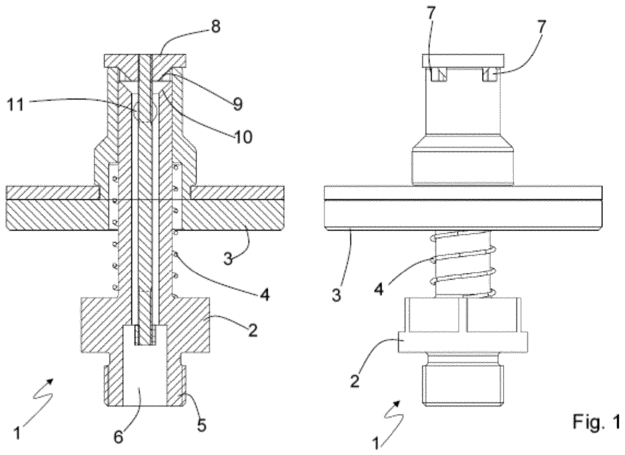

In Figur 1 ist eine Seitenansicht (rechts) und eine Schnittansicht (links) auf eine erste Ausführungsform eines erfindungsgemäßen Entnahmeelementes 1 gezeigt. Das Entnahmeelement 1 weist ein Basisteil 2 sowie einen Teller 3 auf, welcher relativ zu dem Basisteil 2 zwischen einer vorgerückten Position, die in Figur 1 gezeigt ist, und einer zurückgezogenen Position, die nicht gezeigt ist, bewegt werden kann. Mit Hilfe des Federelementes 4 wird der Teller 3 in die vorgerückte Position gedrückt. Das Basisteil 2 hat einen Anschluss 5, mit dem das Basisteil 2 mit einer Nachbehandlungsplatte (nicht gezeigt) verbunden werden kann. Das Entnahmeelement 1 weist einen Fluidkanal auf mit einem Kanaleingang 6 und einem Kanalausgang 7. In der in der Figur 1 gezeigten Situation kann über den Kanaleingang 6 Kühlfluid zugeführt werden, was über die verschiedenen Öffnungen des Kanalausgangs 7 entweichen kann. Falls ein Hohlkörperformling auf dem Teller 3 positioniert ist oder falls das Entnahmeelement in einem entsprechenden Hohlkörperformteil eingetaucht wird, kann somit ein Kühlfluid in das Hohlkörperformteil eingeführt werden. Das Basisteil 2 hat einen hülsenförmigen Abschnitt mit einer konusförmigen Randfläche 10. Innerhalb des hülsenförmigen Abschnittes ist ein Ventilkörper 8 vorgesehen, der entsprechend korrespondierende konusförmige Außenflächen 9 aufweist. Wird nun an den Kanaleingang 6 ein Vakuum angelegt und ist kein Hohlkörperformling auf dem Teller 3 angeordnet, kommt es zu einer großen Druckdifferenz zwischen Kanaleingang 6 und Kanalausgang 7. Diese Druckdifferenz sorgt dafür, dass das Ventilelement 8 in der Figur 1 nach unten bewegt wird, bis die korrespondierenden konischen Flächen 9 und 10 aufeinanderliegen. Dadurch wird der Teller 3 ebenfalls etwas nach unten bewegt, nämlich in seine Verschließposition. In der Verschließposition ist der Ventildurchgang durch den Fluidkanal geschlossen.

Des Weiteren ist eine Bohrung 11 im Basisteil 2 vorgesehen, die eine Verbindung zu dem Fluidkanal herstellt. Sowohl in der Verschließposition als auch in der vorgerückten Position ist die Bohrung 11 verschlossen. Wenn nun ein Hohlkörperformteil auf dem Teller 3 aufliegt, drückt dieses den Teller 3 nach unten, d.h. in seine zurückgezogene Position, wodurch der Ventildurchgang über die Bohrung 11 wieder geöffnet wird und ein Vakuum an den Hohlkörperformling angelegt werden kann.

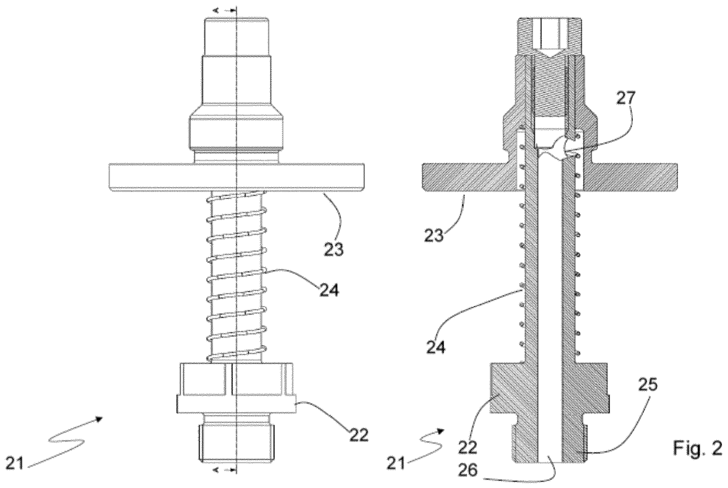

In Figur 2 ist eine alternative Ausführungsform des erfindungsgemäßen Entnahmeelementes 21 gezeigt. Das Entnahmeelement 21 weist ebenfalls ein Basisteil 22 auf. Auch hier ist ein Teller 23 vorgesehen, welcher relativ zu dem Basisteil 22 beweglich ist und mit Hilfe des Federelementes 24 in seine vorgerückte Position, die in Figur 2 dargestellt ist, gedrückt wird. In dieser Position ist ein Fluidkanal mit einem Kanaleingang 26 und einem Kanalausgang 27 unverschlossen, d.h. es kann Fluid über den Fluidkanal zugeführt oder abgeführt werden.

Wird nun das Entnahmeelement, das im allgemeinen auf einer entsprechenden Nachbehandlungsplatte montiert ist, relativ zu der Aufnahmekavität bewegt, in der in der Regel ein Hohlkörperformling angeordnet ist, wird der Teller 23 mit der Öffnung des Hohlkörperformlings in Kontakt treten und der Teller 23 entgegen der Kraft des Federelementes 24 nach unten drücken, sodass der Kanalausgang 27 zunächst verschlossen wird. In dieser Ausführungsform wird jedoch der Teller 23 so weit nach unten gedrückt, dass die Öffnung des Kanalausgangs 27 wieder geöffnet ist, da sich der Teller 23 näher am Basisteil 22 als an dem Kanalausgang 27 befindet. In dieser Position kann somit der Hohlkörperformling evakuiert werden.

Falls in der Aufnahmequalität kein Hohlkörperformling vorhanden ist, wird der Teller 23 lediglich am Rand der Aufnahmekavität anliegen und daher nicht so weit nach unten gedrückt werden wie dies der Fall ist, wenn ein Hohlkörperformling vorhanden ist. Die Abstände sind derart dimensioniert, dass in diesem Fall der Teller 23 nur so weit nach unten gedrückt wird, dass der Kanalausgang 27 verschlossen wird.

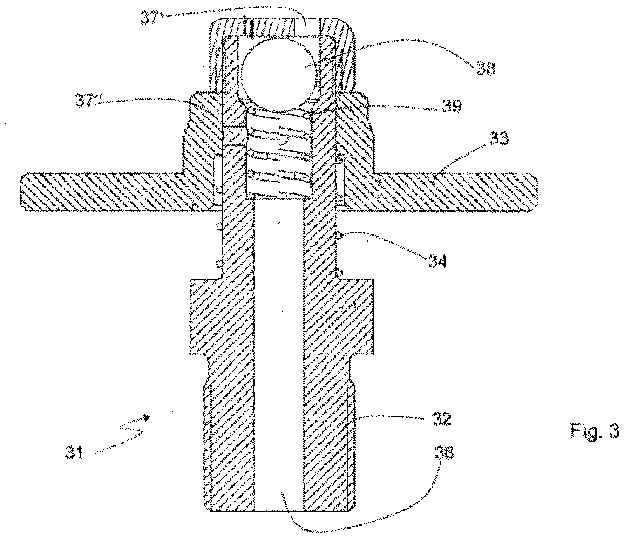

Schließlich ist in Figur 3 eine dritte Ausführungsform dargestellt. Auch hier besteht das Entnahmeelement 31 aus einem Basisteil 32 und einem Teller 33, welche relativ zueinander bewegbar sind.

Mit Hilfe des Federelementes 34 wird der Teller 33 in die vorgerückte Position vorgespannt, die in Figur 3 gezeigt ist. Auch hier ist ein Fluidkanal mit einem Kanaleingang 36 vorgesehen. Der Kanalausgang verzweigt sich und weist zwei Öffnungen 37' und 37" auf. Die Öffnung 37" ist in der dargestellten Position verschlossen. Mit Hilfe eines Hohlkörperformteils kann der Teller 33 nach unten bewegt werden und die Öffnung 37" geöffnet werden. Die Öffnung 37", die durch den Teller 33 verschlossen bzw. freigegeben wird, stellt somit ein Sperrventil dar.

Parallel dazu ist ein Rückschlagventil vorgesehen, welches eine Ventilkugel 38 aufweist, die mittels der Feder 39 in die dargestellte Position gedrückt wird. In dieser Position kann somit Kühlfluid über den Fluidkanal und den Kanalausgang 37' zugeführt werden. Wird nun ein Vakuum an den Kanaleingang 36 angelegt, wird dies dazu führen, dass aufgrund der Druckdifferenz sich die Kugel 38 entgegen der Federkraft 39 nach unten bewegt und den Kanalausgang 37' versperrt. Wenn kein Hohlkörperformteil vorhanden ist, ist somit der Kanal gesperrt. Ist jedoch ein Hohlkörperformteil vorhanden, wird der Teller 33 derart nach unten gedrückt, dass der Kanalausgangs 37" freigegeben wird und über den Fluidkanal der Hohlkörperformling evakuiert werden kann.

### Bezugszeichenliste

- 1, 21, 31: Entnahmeelement
- 2, 22, 32: Basisteil
- 3, 23, 33: Teller
- 4, 24, 34: Federelement
- 5: Anschluss
- 6, 26, 36: Kanaleingang
- 7, 27, 37': Kanalausgang
- 8: Ventilelement
- 9: Außenflächen
- 10: Randfläche
- 11: Bohrung
- 37', 37": Öffnungen
- 38: Kugel
- 39: Feder

## Patentansprüche

1. Entnahmeelement für die Entnahme eines Hohlkörperformteils mit einem Formteilinnenraum und einer Formteilöffnung, welche von einem Formteilrand begrenzt wird, aus einem Spritzgießwerkzeug, wobei das Entnahmeelement ein Basisteil (2, 22, 32) und einen Teller (3, 23, 33), der zwischen einer vorgerückten Position und einer zurückgezogenen Position relativ zum Basisteil (2, 22, 32) bewegbar ist, aufweist, wobei ein Federelement (4, 24, 34) vorgesehen ist, mit welchem der Teller (3, 23, 33) in seine vorgerückte Position gedrückt wird, wobei der Teller (3, 23, 33) dafür vorgesehen ist, mit dem Formteilrand derart in Kontakt zu treten, dass er die Formteilöffnung verschließt und durch den Kontakt mit dem Formteilrand von der vorgerückten Position in die zurückgezogene Position bewegt wird, wobei ein Fluidkanal mit einem Kanaleingang (6, 26, 36) und einem Kanalausgang (7, 27, 37) vorgesehen ist, wobei Kanaleingang (6, 26, 36) und Kanalausgang (7, 27, 37) derart angeordnet sind, dass, wenn der Teller (3, 23, 33) in der zurückgezogenen Position ist, sich der Kanalausgang (7, 27, 37) zu dem Formteilinnenraum öffnet, sodass, wenn der Kanaleingang (6, 26, 36) mit einer Vakuumquelle verbunden wird, Fluid aus dem Formteilinnenraum über den Fluidkanal abgesaugt werden kann, wobei ein Ventilelement (8) mit einem Ventildurchgang zwischen Kanaleingang (6, 26, 36) und Kanalausgang (7, 27, 37) oder am Fluidkanal angeordnet ist, wobei in einer ersten Ventilposition der Querschnitt des Ventildurchgangs größer als in einer zweiten Ventilposition ist, **dadurch gekennzeichnet, dass** der Ventildurchgang in der vorgerückten Position und in der zurückgezogenen Position des Tellers (3, 23, 33) geöffnet ist, wobei das Ventilelement (8) derart dimensioniert ist, dass in der vorgerückten Position, wenn der Fluiddruck am Kanaleingang (6, 26, 36) kleiner als am Kanalausgang (7, 27, 37) ist, sich das Ventilelement (8) in die zweite Ventilposition bewegt, während in der zurückgezogenen Position das Ventilelement (8) immer in der ersten Ventilposition ist.

2. Entnahmeelement für die Entnahme eines Hohlkörperformteils mit einem Formteilinnenraum und einer Formteilöffnung, welche von einem Formteilrand begrenzt wird, aus einem Spritzgießwerkzeug, wobei das Entnahmeelement ein Basisteil (2, 22, 32) und einen Teller (3, 23, 33), der zwischen einer vorgerückten Position und einer zurückgezogenen Position relativ zum Basisteil (2, 22, 32) bewegbar ist, aufweist, wobei ein Federelement (4, 24, 34) vorgesehen ist, mit welchem der Teller (3, 23, 33) in seine vorgerückte Position gedrückt wird, wobei der Teller (3, 23, 33) dafür vorgesehen ist, mit dem Formteilrand derart in Kontakt zu treten, dass er die Formteilöffnung verschließt und durch den Kontakt mit dem Formteilrand von der vorgerückten Position in die zurückgezogene Position bewegt wird, wobei ein Fluidkanal mit einem Kanaleingang (6, 26, 36) und einem Kanalausgang (7, 27, 37) vorgesehen ist, wobei Kanaleingang (6, 26, 36) und Kanalausgang (7, 27, 37) derart angeordnet sind, dass, wenn der Teller (3, 23, 33) in der zurückgezogenen Position ist, sich der Kanalausgang (7, 27, 37) zu dem Formteilinnenraum öffnet, sodass, wenn der Kanaleingang (6, 26, 36) mit einer Vakuumquelle verbunden wird, Fluid aus dem Formteilinnenraum über den Fluidkanal abgesaugt werden kann, wobei ein Ventilelement (8) mit einem Ventildurchgang zwischen Kanaleingang (6, 26, 36) und Kanalausgang (7, 27, 37) oder am Fluidkanal angeordnet ist, wobei in einer ersten Ventilposition der Querschnitt des Ventildurchgangs größer als in einer zweiten Ventilposition ist, **dadurch gekennzeichnet, dass** der Ventildurchgang in der vorgerückten Position und in der zurückgezogenen Position des Tellers (3, 23, 33) geöffnet ist, wobei der Teller (3, 23, 33) zwischen der vorgerückten Position, der zurückgezogenen Position und einer Verschließposition hin und her bewegbar ist, wobei in der Verschließposition des Tellers (3, 23, 33) das Ventilelement (8) in der zweiten Ventilposition ist.

3. Entnahmeelement nach Anspruch 2, **dadurch gekennzeichnet, dass** die Verschließposition zwischen der vorgerückten Position und der zurückgezogenen Position angeordnet ist.

4. Entnahmeelement nach einem der Ansprüche 1 bis 3, **dadurch gekennzeichnet, dass** in der zweiten Ventilposition der Ventildurchgang geschlossen ist.

5. Entnahmeelemente nach einem der Ansprüche 1-4, **dadurch gekennzeichnet, dass** in einer dritten Ventilposition der Querschnitt des Ventildurchgangs kleiner als in der ersten Ventilposition und größer als in der zweiten Ventilposition ist, wobei in der vorgerückten Position des Tellers (3, 23, 33) das Ventilelement (8) in der dritten Ventilposition ist, wenn der Fluiddruck am Kanaleingang (6, 26, 36) größer oder gleich dem Fluiddruck am Kanalausgang (7, 27, 37) ist.

6. Entnahmeelement nach einem der Ansprüche 1-5, **dadurch gekennzeichnet, dass** das Ventilelement (8) ein Rückschlagventil und ein Sperrventil aufweist, wobei das Rückschlagventil und das Sperrventil parallel zueinander angeordnet sind, wobei in der zurückgezogenen Position des Tellers (3, 23, 33) das Sperrventil geöffnet und in der vorgerückten Position des Tellers (3, 23, 33) das Sperrventil geschlossen ist.

7. Entnahmeelement nach Anspruch 6, **dadurch gekennzeichnet, dass** das Rückschlagventil derart angeordnet ist, dass es sich schließt, wenn der Fluiddruck am Kanaleingang (6, 26, 36) kleiner als am Kanalausgang (7, 27, 37) ist.

8. Nachbehandlungsplatte mit mindestens einem Entnahmeelement nach einem der Ansprüche 1 bis 7, **dadurch gekennzeichnet, dass** das Basisteil (2, 22, 32) des Entnahmeelementes mit der Nachbehandlungsplatte derart verbunden ist, dass über die Nachbehandlungsplatte Fluid über den Kanaleingang (6, 26, 36) in den Fluidkanal zugeführt oder aus diesem abgesaugt werden kann.

9. System zur Weiterbehandlung von mittels Spritzgießen hergestellter Hohlkörpervorformlinge mit
i) einer Aufnahmeplatte, welche zumindest eine Aufnahmekavität zur Aufnahme eines Formlings aufweist,
ii) einem Nachbehandlungssystem mit einer Nachbehandlungsplatte nach Anspruch 8,
iii) einer Bewegungsvorrichtung, mit der die Aufnahmeplatte relativ zur Nachbehandlungsplatte zwischen einer hinteren Position und einer vorderen Position hin- und her bewegt werden kann, wobei der Abstand zwischen der Aufnahmeplatte und der Nachbehandlungsplatte in der vorderen Position kleiner als in der hinteren Position ist.

10. System nach Anspruch 9, **dadurch gekennzeichnet, dass** die Nachbehandlungsplatte zumindest einen Nachbehandlungsstift mit einem Fluidkanal aufweist, durch welchen Fluid in das Innere eines in der Aufnahmekavität aufgenommenen Formlings eingebracht oder daraus abgesaugt werden kann, wobei in der vorderen Position, der Nachbehandlungsstift innerhalb der Aufnahmekavität positioniert ist und in der hinteren Position der Nachbehandlungsstift nicht innerhalb der Aufnahmekavität positioniert ist.

11. System nach Anspruch 9 oder 10, **dadurch gekennzeichnet, dass** in der vorderen Position der Teller (3, 23, 33) entweder an einem in der Aufnahmekavität aufgenommenen Hohlkörperformteil anliegt und das Ventilelement (8) in der ersten Ventilposition ist, oder, falls kein Hohlkörperformteil in der Aufnahmekavität positioniert ist, an der Aufnahmekavität anliegt und das Ventilelement (8) in der zweiten Ventilposition ist.

## Claims

1. A removal element for the removal from an injection moulding tool of a hollow moulded article having a moulded article interior and a moulded article opening, which is bordered by a moulded article rim, wherein the removal element has a base part (2, 22, 32) and a plate (3, 23, 33) which can be moved relative to the base part (2, 22, 32) between an advanced position and a retracted position, wherein a spring element (4, 24, 34) is provided with which the plate (3, 23, 33) is urged into its advanced position, wherein the plate (3, 23, 33) is configured so that it comes into contact with the rim of the moulded article in such a manner that it seals the opening of the moulded article and is moved from the advanced position into the retracted position by means of the contact with the rim of the moulded article, wherein a fluid runner with a runner inlet (6, 26, 36) and a runner outlet (7, 27, 37) is provided, wherein the runner inlet (6, 26, 36) and runner outlet (7, 27, 37) are disposed in such a manner that when the plate (3, 23, 33) is in the retracted position, the runner outlet (7, 27, 37) to the moulded article interior opens, so that when the runner inlet (6, 26, 36) is connected to a vacuum source, fluid can be aspirated from the interior of the moulded article via the fluid runner, wherein a valve element (8) with a valve passage is disposed between the runner inlet (6, 26, 36) and runner outlet (7, 27, 37) or on the fluid runner, wherein in a first valve position, the cross section of the valve passage is larger than in a second valve position, **characterized in that** the valve passage is open in the advanced position and in the retracted position of the plate (3, 23, 33), wherein the dimensions of the valve element (8) are such that in the advanced position, when the fluid pressure at the runner inlet (6, 26, 36) is lower than at the runner outlet (7, 27, 37), the valve element (8) moves into the second valve position, whereas in the retracted position, the valve element (8) is always in the first valve position.

2. A removal element for the removal from an injection moulding tool of a hollow moulded article having a moulded article interior and a moulded article opening, which is bordered by a moulded article rim, wherein the removal element has a base part (2, 22, 32) and a plate (3, 23, 33) which can be moved relative to the base part (2, 22, 32) between an advanced position and a retracted position, wherein a spring element (4, 24, 34) is provided with which the plate (3, 23, 33) is urged into its advanced position, wherein the plate (3, 23, 33) is configured so that it comes into contact with the rim of the moulded article in such a manner that it seals the opening of the moulded article and is moved from the advanced position into the retracted position by means of the contact with the rim of the moulded article, wherein a fluid runner with a runner inlet (6, 26, 36) and a runner outlet (7, 27, 37) is provided, wherein the runner inlet (6, 26, 36) and runner outlet (7, 27, 37) are disposed in such a manner that when the plate (3, 23, 33) is in the retracted position, the runner outlet (7, 27, 37) to the moulded article interior opens, so that when the runner inlet (6, 26, 36) is connected to a vacuum source, fluid can be aspirated from the interior of the moulded article via the fluid runner, wherein a valve element (8) with a valve passage is disposed between the runner inlet (6, 26, 36) and runner outlet (7, 27, 37) or on the fluid runner, wherein in a first valve position, the cross section of the valve passage is larger than in a second valve position, **characterized in that** the valve passage is open in the advanced position and in the retracted position of the plate (3, 23, 33), wherein the plate (3, 23, 33) can be moved backwards and forwards between the advanced position, the retracted position and a sealing position, wherein in the sealing position of the plate (3, 23, 33), the valve element (8) is in the second valve position.

3. The removal element according to claim 1, **characterized in that** the closed position is disposed between the advanced position and the retracted position.

4. The removal element according to one of claims 1 to 3, **characterized in that** in the second valve position, the valve passage is closed.

5. The removal element according to one of claims 1 to 4, **characterized in that** in a third valve position, the cross section of the valve passage is smaller than in the first valve position and larger than in the second valve position, wherein, in the advanced position of the plate (3, 23, 33), the valve element (8) is in the third valve position when the fluid pressure at the runner inlet (6, 26, 36) is greater than or equal to the fluid pressure at the runner outlet (7, 27, 37).

6. The removal element according to one of claims 1 to 5, **characterized in that** the valve element (8) has a non-return valve and a check valve, wherein the non-return valve and the check valve are disposed parallel to each other, wherein, in the retracted position of the plate (3, 23, 33), the check valve is open and in the advanced position of the plate (3, 23, 33), the check valve is closed.

7. The removal element according to claim 6, **characterized in that** the non-return valve is disposed in such a manner that it closes when the fluid pressure at the runner inlet (6, 26, 36) is lower than at the runner outlet (7, 27, 37).

8. A post-treatment plate with at least one removal element according to one of claims 1 to 7, **characterized in that** the base part (2, 22, 32) of the removal element is connected to the post-treatment plate in such a manner that, using the post-treatment plate, fluid can be supplied to or aspirated from the fluid runner via the runner inlet (6, 26, 36).

9. A system for the further treatment of hollow preforms produced by injection moulding, having
i) a receiving plate which has at least one receiving cavity for receiving a moulding,
ii) a post-treatment system with a post-treatment plate according to claim 8,
iii) a moving device with which the receiving plate can be moved backwards and forwards relative to the post-treatment plate between a rear position and a forward position, wherein the distance between the receiving plate and the post-treatment plate in the forward position is smaller than in the rear position.

10. The system according to claim 9, **characterized in that** the post-treatment plate has at least one post-treatment pin with a fluid runner through which fluid can be introduced into or aspirated from the interior of a moulding received in the receiving cavity, wherein in the forward position, the post-treatment pin is positioned within the receiving cavity and in the rear position, the post-treatment pin is not positioned within the receiving cavity.

11. The system according to claim 9 or claim 10, **characterized in that** in the forward position, either the plate (3, 23, 33) abuts a hollow moulded article received in the receiving cavity and the valve element (8) is in the first valve position or, in the case in which no hollow moulded article is positioned in the receiving cavity, it abuts the receiving cavity and the valve element (8) is in the second valve position.

## Revendications

1. Élément d'extraction pour l'extraction d'une pièce moulée creuse, comprenant un espace intérieur de pièce moulée et une ouverture de pièce moulée, laquelle est délimitée par un bord de pièce moulée, depuis un outil de moulage par injection, l'élément d'extraction comportant un élément de base (2, 22, 32) et un plateau (3, 23, 33) qui est déplaçable entre une position avancée et une position rétractée par rapport à l'élément de base (2, 22, 32), un élément ressort (4, 24, 34) étant prévu, au moyen duquel le plateau (3, 23, 33) est poussé dans sa position avancée, le plateau (3, 23, 33) étant prévu pour entrer en contact avec le bord de la pièce moulée de façon à fermer l'ouverture de la pièce moulée et, par contact avec le bord de la pièce moulée, à être déplacé de la position avancée dans la position rétractée, un canal à fluide pourvu d'une entrée de canal (6, 26, 36) et d'une sortie de canal (7, 27, 37) étant prévu, l'entrée de canal (6, 26, 36) et la sortie de canal (7, 27 , 37) étant disposées de façon telle que, lorsque le plateau (3, 23, 33) se trouve dans la position rétractée, la sortie de canal (7, 27, 37) s'ouvre vers l'espace intérieur de la pièce moulée, si bien que, lorsque l'entrée de canal (6, 26, 36) est reliée à une source de vide, le fluide peut être aspiré de l'espace intérieur de la pièce moulée via le canal à fluide, un élément de soupape (8) pourvu d'un passage de soupape étant disposé entre l'entrée de canal (6, 26, 36) et la sortie de canal (7, 27, 37) ou sur le canal à fluide, la section du passage de soupape étant, dans une première position de soupape, plus grande que dans une seconde position de soupape,
**caractérisé en ce que** le passage de soupape dans la position avancée et dans la position rétractée du plateau (3, 23, 33) est ouvert, l'élément de soupape (8) étant dimensionné de telle sorte que dans la position avancée, lorsque la pression du fluide en entrée de canal (6, 26, 36) est plus faible qu'en sortie de canal (7, 27, 37), l'élément de soupape (8) se déplace dans la seconde position de soupape, tandis que dans la position rétractée, l'élément de soupape (8) se trouve toujours dans la première position de soupape.

2. Élément d'extraction pour l'extraction d'une pièce moulée creuse, comprenant un espace intérieur de pièce moulée et une ouverture de pièce moulée, laquelle est délimitée par un bord de pièce moulée, hors d'un outil de moulage par injection, l'élément d'extraction comportant un élément de base (2, 22, 32) et un plateau (3, 23, 33) qui est déplaçable entre une position avancée et une position rétractée par rapport à l'élément de base (2, 22, 32), un élément ressort (4, 24, 34) étant prévu, au moyen duquel le plateau (3, 23, 33) est poussé dans sa position avancée, le plateau (3, 23, 33) étant prévu pour entrer en contact avec le bord de la pièce moulée de façon à fermer l'ouverture de la pièce moulée et, par contact avec le bord de la pièce moulée, à être déplacé de la position avancée dans la position rétractée, un canal à fluide pourvu d'une entrée de canal (6, 26, 36) et d'une sortie de canal (7, 27, 37) étant prévu, l'entrée de canal (6, 26, 36) et la sortie de canal (7, 27 , 37) étant disposées de façon telle que, lorsque le plateau (3, 23, 33) se trouve dans la position rétractée, la sortie de canal (7, 27, 37) s'ouvre vers l'espace intérieur de la pièce moulée, de sorte que, lorsque l'entrée de canal (6, 26, 36) est reliée à une source de vide, du fluide peut être aspiré de l'espace intérieur de la pièce moulée via le canal à fluide, un élément de soupape (8) pourvu d'un passage de soupape étant disposé entre l'entrée de canal (6, 26, 36) et la sortie de canal (7, 27, 37) ou sur le canal à fluide, la section du passage de soupape étant, dans une première position de soupape, supérieure à celle dans une seconde position de soupape,
**caractérisé en ce que** le passage de soupape dans la position avancée et dans la position rétractée du plateau (3, 23, 33) est ouvert, le plateau (3, 23, 33) étant déplaçable en va-et-vient entre la position avancée, la position rétractée et une position de fermeture, l'élément de soupape (8) se trouvant, dans la position de fermeture du plateau (3, 23, 33), dans la seconde position de soupape.

3. Élément d'extraction selon la revendication 2, **caractérisé en ce que** la position de fermeture est disposée entre la position avancée et la position rétractée.

4. Élément d'extraction selon l'une des revendications 1 à 3, **caractérisé en ce que,** dans la seconde position de soupape, le passage de soupape est fermé.

5. Élément d'extraction selon l'une des revendications 1 à 4, **caractérisé en ce que,** dans une troisième position de soupape, la section du passage de soupape est plus petite que dans la première position de soupape et plus grande que dans la seconde position de soupape, l'élément de soupape (8) se trouvant, dans la position avancée du plateau (3, 23, 33), dans la troisième position de soupape lorsque la pression du fluide en entrée de canal (6, 26, 36) est supérieure ou égale à la pression du fluide en sortie de canal (7, 27, 37).

6. Élément d'extraction selon l'une des revendications 1 à 5, **caractérisé en ce que** l'élément de soupape (8) comporte une soupape de retenue et une soupape d'arrêt, la soupape de retenue et la soupape d'arrêt étant disposées parallèlement l'une à l'autre, la soupape d'arrêt étant ouverte dans la position rétractée du plateau (3, 23, 33) et la soupape d'arrêt étant fermée dans la position avancée du plateau (3, 23, 33).

7. Élément d'extraction selon la revendication 6, **caractérisé en ce que** la soupape de retenue est disposée de façon telle qu'elle se ferme lorsque la pression du fluide en entrée de canal (6, 26, 36) est plus faible qu'en sortie de canal (7, 27, 37).

8. Plaque de post-traitement comprenant au moins un élément d'extraction selon l'une des revendications 1 à 7, **caractérisée en ce que** la partie de base (2, 22, 32) de l'élément de réception est reliée à la plaque de post-traitement de façon telle que, par l'intermédiaire de la plaque de post-traitement, du fluide peut être guidé via l'entrée de canal (6, 26, 36) dans le canal à fluide ou aspiré depuis celui-ci.

9. Système de post-traitement de préformes creuses fabriquées par moulage par injection, comprenant
(i) une plaque de réception qui présente au moins une cavité de réception destinée à recevoir une préforme,
(ii) un système de post-traitement comprenant une plaque de post-traitement selon la revendication 8,
(iii) un dispositif de déplacement permettant de déplacer en va-et-vient la plaque de réception par rapport à la plaque de post-traitement entre une position arrière et une position avant, la distance entre la plaque de réception et la plaque de post-traitement dans la position avant étant plus petite que dans la position arrière.

10. Système selon la revendication 9, **caractérisé en ce que** la plaque de post-traitement présente au moins une broche de post-traitement pourvue d'un canal à fluide à travers lequel du fluide peut être introduit à l'intérieur d'une préforme reçue dans la cavité de réception ou être aspiré de celle-ci, auquel cas, dans la position avant, la broche de post-traitement est positionnée à l'intérieur de la cavité de réception et dans la position arrière, la broche de post-traitement n'est pas positionnée dans la cavité de réception.

11. Système selon la revendication 9 ou 10, **caractérisé en ce que** dans la position avant, le plateau (3, 23, 33) repose au niveau d'une pièce moulée creuse logée dans la cavité de réception et l'élément de soupape (8) se trouve dans la première position de soupape ou, dans le cas où aucune pièce moulée creuse n'est positionnée dans la cavité de réception, il repose au niveau de la cavité de réception et l'élément de soupape (8) se trouve dans la seconde position de soupape.
